# EUROPÄISCHE PATENTANMELDUNG

(11) **EP 1 487 096 A1**
(43) Veröffentlichungstag der Anmeldung: **15.12.2004**
(21) Anmeldenummer: 03013218.7
(22) Anmeldetag: 12.06.2003
(51) Int. Cl.: H02P 3/22

(54) **Servoantrieb für ein Bewegungselement**

(71) Anmelder: Hauni Maschinenbau AG, 21033 Hamburg (DE)
(72) Erfinder: Grothaus, Frank, 22763 Hamburg (DE)
(74) Vertreter: Seemann, Ralph, Dr. Dipl.-Phys.

(57) **Zusammenfassung**

Die Erfindung betrifft einen Servoantrieb (1-7) für ein Bewegungselement (12-14), insbesondere der tabakverarbeitenden Industrie oder der Verpackungsindustrie, mit Spannungsanschlüssen (15-15").

Die Erfindung zeichnet sich dadurch aus, dass eine Kurzschlussvorrichtung (8, 9) vorgesehen ist, die bei einer vorgebbaren Bedingung die Spannungsanschlüsse (15-15") kurz schließt.

## Beschreibung

Die Erfindung betrifft einen Servoantrieb für ein Bewegungselement, insbesondere der tabakverarbeitenden Industrie oder der Verpackungsindustrie, mit Spannungsanschlüssen.

Servoantriebe, werden beispielsweise als Einzelantriebe in einer Zigarettenmaschine oder einer Verpackungsmaschine verwendet, um ein Bewegungselement wie beispielsweise eine Trommel, ein Schneidmesser, einen Verpackungsteller, auf dem entsprechende Verpackungsoperationen ausgeführt werden können oder dergleichen zu bewegen. Bei einem Stillstand der Maschine bzw. eines Teils der Maschine können diese Bewegungselemente vom Bedienpersonal entsprechend eingestellt bzw. gewartet werden. Hierbei kann es zu ungewollten Bewegungen der Bewegungselemente kommen, da die Bewegungselemente, soweit keine aufwendige Bremse vorgesehen ist, abgesehen von der Lagerreibung, nach manuellem Anstoßen ungebremst weiter rotieren. Dies birgt ein hohes Verletzungsrisiko für die Bedienperson. Zusätzlich kann durch Fehlfunktion an der Steuerung ein stehendes Bewegungselement plötzlich anfahren, was die Gefährdung des Bedienpersonals erhöht.

Demgegenüber ist es Aufgabe der vorliegenden Erfindung einen gattungsgemäßen Servoantrieb derart weiterzubilden, dass eine entsprechende Verletzungsgefahr der Bedienpersonen verringert wird.

Gelöst wird diese Aufgabe durch einen Servoantrieb für ein Bewegungselement, insbesondere der tabakverarbeitenden Industrie oder der Verpackungsindustrie, mit Spannungsanschlüssen, wobei eine Kurzschlussvorrichtung vorgesehen ist, die bei einer vorgebbaren Bedingung die Spannungsanschlüsse kurzschließt.

Die Erfindung geht von dem Grundgedanken aus, dass Servoantriebe, die im Rahmen der Erfindung insbesondere Antriebssysteme mit einem dynamischen, genauen und überlastfähigen Verhalten in einem großen Drehzahlstellbereich sind und vorzugsweise Synchronmotoren wie permanent-erregte AC-Synchronmotoren umfassen, bei einem Kurzschluss eines entsprechenden Antriebs bzw. Motors eine Bewegung des Teils der Maschine automatisch und in Abhängigkeit der Drehzahl abbremsen. Ferner kann eine effektive Stillstandssicherung vorgenommen werden. Wobei insbesondere sogar Stillstandswächter entfallen könnten.

Wenn die Bedingung die Unterbrechung der Bestromung wenigstens eines Teils des Servoantriebs ist, wird die Gefahr durch frei auslaufende Massen reduziert. Ferner wird eine effektive Stillstandssicherung vorgenommen. Wenn die Bedingung eine Fehlermeldung oder eine Notausschaltung wenigstens eines Teils einer Maschine, in der das Bewegungselement angeordnet ist, ist, wird ein sicheres Abbremsen im Fehlerfall bzw. bei einer Notauschaltung ermöglicht und ein ungewolltes Wiederanfahren des Servoantriebs verhindert.

Vorzugsweise umfasst der Servoantrieb einen Synchronmotor, dessen Spannungsanschlüsse mittels der Kurzschlussvorrichtung vorzugsweise kurzzuschließen sein können. In einem besonderen bevorzugten Ausübungsbeispiel ist der Synchronmotor ein Schrittmotor. Das Bewegungselement ist vorzugsweise eine Trommel oder ein Schneidmesser einer Maschine der tabakverarbeitenden Industrie oder ein Drehteller einer Verpackungsmaschine. Es können allerdings auch andere Bewegungselemente der tabakverarbeitenden Industrie oder einer Verpackungsmaschine denkbar sein. In einem besonders bevorzugten Ausführungsbeispiel dient der Servoantrieb als Direktantrieb des Bewegungselements.

Eine besonders elegante Variante ist dann gegeben, wenn die Kurzschlussvorrichtung ein Relais umfasst. In diesem Fall ist die Steuerung der Sicherung vereinfacht möglich.

Erfindungsgemäß umfasst eine Maschine der tabakverarbeitenden Industrie oder der Verpackungsindustrie mit einem Bewegungselement einen erfindungsgemäßen Servoantrieb der vorgeschriebenen Art.

Vorzugsweise umfasst die Maschine eine Tür und/oder ein Abdeckungselement, dass geöffnet werden kann, wobei eine Sicherheitsvorrichtung vorgesehen ist, die ein Öffnen der Tür und/oder des Abdeckungselements nur bei einem Kurzschließen der Spannungsanschlüsse ermöglicht. Es ist insofern beispielsweise eine Sicherheitsschleife vorgesehen, die vorsieht, dass die Türen bzw. Abdeckungen nur dann geöffnet werden können, wenn sämtliche Spannungsanschlüsse der Servoantriebe oder der Synchronmotoren eines entsprechenden Bereichs einer Maschine kurzgeschlossen sind.

Es ist insbesondere bevorzugt, die Motorklemmen beispielsweise durch Relaiskontakte kurz zu schließen.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen
- Fig. 1: einen schematischen erfindungsgemäßen Schaltplan für einen Servoantrieb.
- Fig. 2: einen Teil eines erfindungsgemäßen Schaltplanes für einen Servoantrieb und
- Fig. 3: einen Teil eines weiteren schematischen und erfindungsgemäßen Schaltplanes.

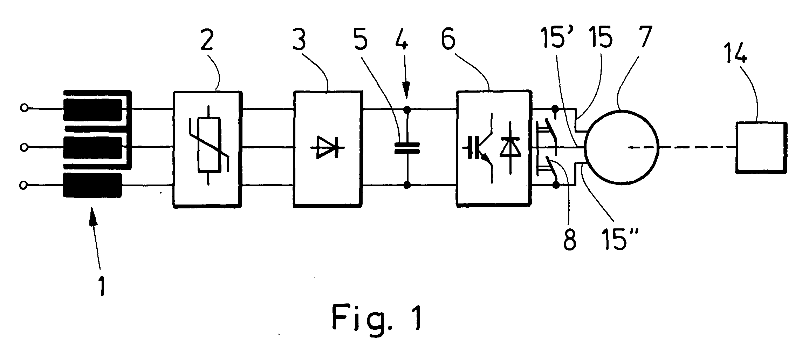

Fig. 1 zeigt einen schematischen Schaltplan zur Ansteuerung eines Servoantriebs. Die in dem Schaltplan verwendeten Elemente sind an sich bekannt. So wird beispielsweise auf die Veröffentlichung "Praxis der Antriebstechnik, Band 7 "Servoantriebe, Grundlagen, Eigenschaften, Projektierung" Ausgabe 04/94" der SEW EURO-DRIVE verwiesen und dort insbesondere die Seiten 36 bis 38.

Drehstrom wird einer Netzdrossel 1 zugeführt. An die Netzdrossel 1 schließt sich ein Überspannungsschutz 2 an und dann ein Gleichrichter 3. Über einen Zwischenkreis 4, der einen Kondensator 5 umfasst wird Gleichspannung einem Wechselrichter 6 zugeführt. Von dem Wechselrichter 6 ausgehend wird ein Synchronmotor 7, der vorzugsweise ein Schrittmotor sein kann, mit Spannung versorgt. Hierzu sind die Spannungsanschlüsse 15-15" vorgesehen. Mittels des Schrittmotors 7 wird in diesem Ausführungsbeispiel ein Drehteller beispielsweise einer Verpackungsmaschine der tabakverarbeitenden Industrie zum Verpacken von Zigaretten direkt angetrieben.

Erfindungsgemäß ist ein Schalter 8 vorgesehen, der die Spannungsanschlüsse 15-15" des Schrittmotors 7 bei Vorherrschen einer vorgebbaren Bedingung kurzschließt. Die Bedingung kann hierbei diejenige sein, dass der Motor 7 nicht bestromt wird oder ein Notausschaltsignal oder ein anderes Signal, mit dem wenigsten ein Teil einer Maschine, in dem der Motor 7 angeordnet ist, abgeschaltet wird. Der Wechselrichter kann ausgestaltet sein wie der Wechselrichter des Achsmoduls aus dem Stand der Technik "Praxis der Antriebstechnik", Band 7, das oben genannt, ist auf Seite 38 unter dem Abschnitt 4.2.2.1. Die Schalter 8 können mechanisch von Hand betätigbar sein oder automatisch.

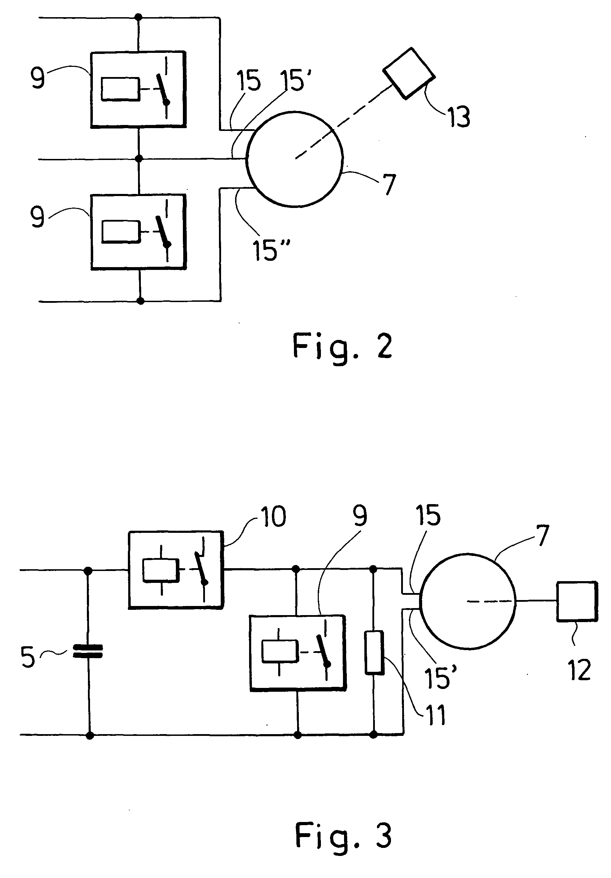

In einer besonders bevorzugten Ausführungsform sind zum Kurzschließen gemäß Fig. 2 zwei Relais 9 vorgesehen und gemäß Fig. 3 ein Relais 9. In dem Ausführungsbeispiel gemäß Fig. 2 werden die beiden Relais 9 vorzugsweise gleichzeitig kurzgeschlossen. Mittels des Schrittmotors 7 der Fig. 2 wird beispielsweise ein Schneidmesser 13 angetrieben. Mittels des Schrittmotors 7 der Fig. 3 wird beispielsweise eine Trommel direkt angetrieben. In Fig. 3 ist ferner noch ein Relais 10 vorgesehen, um einen Kurzschluss in dem Netzmodul, das beispielsweise in Fig. 1 mit den Bezugsziffern 1, 2, 3 und 4 angedeutet ist, zu verhindern. Für den Fall, dass das Relais 9 geschlossen wird, wird das Relais 10 geöffnet.

In Fig. 3 ist ferner noch ein Sensor 11 vorgesehen, der einer Steuer- bzw. Regeleinrichtung, die nicht dargestellt ist, das Öffnen und das Schließen des Relais 9 mitteilt. Dieses kann beispielsweise zur Stillstandsüberwachung dienen.

Der Vorteil der Erfindung gegenüber beispielsweise einem Bremschopper, der auch in dem Handbuch "Praxis der Antriebstechnik", Band 7 dargestellt ist, ist insbesondere derjenige, dass wenig Energie in entsprechenden Energieverbrauchern verschwendet wird.

Die Erfindung eignet sich insbesondere dazu, Synchronmotoren als Einzelantriebe für eine Zigarettenmaschine oder eine andere Maschine der tabakverarbeitenden Industrie oder eine Verpackungsmaschine im Stillstand einzeln gegen ungewolltes Wiederanlaufen zu sichern. Hierzu wird der Motor an den Anschlussklemmen beispielsweise durch ein Relais kurzgeschlossen, wodurch ein Drehzahlabhängiges Bremsmoment erzeugt wird. Dadurch wird der Motor im Fehlerfall sicher abgebremst, so dass auch ein ungewolltes Wiederanfahren des Motors nicht möglich ist. Hierdurch ist insbesondere auch ein schnelles und kalkulierbares Abbremsen im Fehlerfall möglich.

Der Sensor in Fig. 3 kann auch dazu dienen, Türen oder Abdeckungen von entsprechenden Maschinen solange geschlossen zu halten, wie der Sensor misst, dass das Relais 9 noch offen ist. Es ist nur dann möglich Türen, bzw. Abdeckungen zu öffnen, wenn alle Relais in einem entsprechenden Bereich der Maschine geschlossen sind.

Ein weiterer Vorteil der erfindungsgemäß ausgerüsteten Maschine besteht darin, dass die Bewegungselemente, z.B. Trommeln, bei Kurzschluss der Anschlussklemmen im Gegensatz zu der Verwendung einer herkömmlichen Bremse z.B. zu Reinigungszwecken problemlos von Hand gedreht werden können, wobei eine unkontrollierte Bewegung vermieden wird, da die Bewegungselemente sich selbst bremsen.

### Bezugszeichenliste

- 1: Netzdrossel
- 2: Überspannschutz
- 3: Gleichrichter
- 4: Zwischenkreis
- 5: Kondensator
- 6: Wechselrichter
- 7: Schrittmotor
- 8: Schalter
- 9: Relais
- 10: Relais
- 11: Sensor
- 12: Trommel
- 13: Schneidmesser
- 14: Drehteller
- 15-15": Spannungsanschluss

## Patentansprüche

1. Servoantrieb (1-7) für ein Bewegungselement (12-14), insbesondere der tabakverarbeitenden Industrie oder der Verpackungsindustrie, mit Spannungsanschlüssen (15-15"), **dadurch gekennzeichnet, dass** eine Kurzschlussvorrichtung (8, 9) vorgesehen ist, die bei einer vorgebbaren Bedingung die Spannungsanschlüsse (15-15") kurz schließt.

2. Servoantrieb (1-7) nach Anspruch 1, **dadurch gekennzeichnet, dass** die Bedingung die Unterbrechung der Bestromung wenigstens eines Teils des Servoantriebs (1-7) ist.

3. Servoantrieb (1-7) nach Anspruch 1, **dadurch gekennzeichnet, dass** die Bedingung eine Fehlermeldung oder eine Notausschaltung wenigstens eines Teils einer Maschine, in der das Bewegungselement (12-14) angeordnet ist, ist.

4. Servoantrieb (1-7) nach einem oder mehreren der Ansprüche 1 bis 3, **dadurch gekennzeichnet, dass** ein Synchronmotor (7) umfasst ist.

5. Servoantrieb nach Anspruch 4, **dadurch gekennzeichnet, dass** der Synchronmotor (7) ein Schrittmotor ist.

6. Servoantrieb nach einem oder mehreren der Ansprüche 1 bis 5, **dadurch gekennzeichnet, dass** die Kurzschlussvorrichtung (8, 9) ein Relais (9) umfasst.

7. Maschine der tabakverarbeitenden Industrie oder der Verpackungsindustrie mit einem Bewegungselement (12-14) und einem Servoantrieb (1-7) nach einem oder mehreren der Ansprüche 1 bis 6.

8. Maschine nach Anspruch 7, **dadurch gekennzeichnet, dass** eine Tür und/oder ein Abdeckungselement, dass geöffnet werden kann, vorgesehen ist, wobei eine Sicherheitsvorrichtung (9) vorgesehen ist, die ein Öffnen der Tür und/oder des Abdeckungselements nur bei einem Kurzschließen der Spannungsanschlüsse (15-15") ermöglicht.
